(19) Europäisches Patentamt
European Patent Office
Office européen des brevets

(11) **EP 3 715 788 A1**

(12) **EUROPEAN PATENT APPLICATION**

(43) Date of publication:
**30.09.2020 Bulletin 2020/40**

(51) Int Cl.:
***G01C 21/30*** *(2006.01)*

(21) Application number: **20165168.4**

(22) Date of filing: **24.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 CN 201910251676**

(71) Applicant: **Baidu Online Network Technology (Beijing) Co., Ltd. Beijing 100085 (CN)**

(72) Inventors:
• **SHI, Zhongqi Beijing, 100085 (CN)**
• **WANG, Yile Beijing, 100085 (CN)**
• **YANG, Ning Beijing, 100085 (CN)**

(74) Representative: **Zimmermann, Tankred Klaus et al Schoppe, Zimmermann, Stöckeler Zinkler, Schenk & Partner mbB Patentanwälte Radlkoferstrasse 2 81373 München (DE)**

(54) **METHOD, DEVICE, SERVER AND MEDIUM FOR DETERMINING QUALITY OF TRAJECTORY-MATCHING DATA**

(57) The embodiments of the present disclosure provide a method and a device for determining quality of trajectory-matching data, a server and a medium. The method includes: determining (110) a road where a travel trajectory is located by matching the travel trajectory with roads in a road network; determining (120) global quality of the travel trajectory based on road information of the road where the travel trajectory is located and data of the travel trajectory; dividing (130) the travel trajectory into at least two trajectory segments; and determining (140) local quality of each trajectory segment based on trajectory data of the trajectory segment and road information of the road where the trajectory segment is located.

FIG. 3C

EP 3 715 788 A1

**Description**

## TECHNICAL FIELD

The present disclosure relates to a field of map technologies, and more particularly, to a method, a device, a server and a medium for determining quality of trajectory-matching data.

## BACKGROUND

Map matching technologies determine an accurate location of a vehicle on a road by using an electronic map and positioning information, which belong to a software error correction technology. The basic idea of this technology is to position the location of the vehicle relative to the map by linking a positioning trajectory of the vehicle obtained by a positioning device and road information in an electronic map database.

In order to facilitate usage of map-matching data by applications for intelligent transportation (road conditions, ETA), navigation (route mining, road tying), and data engine information (opening, blocking, hooking, new road discovery, traffic limitation), it is required to determine quality of the map-matching data.

However, an existing method for determining the quality of the map-matching data generally performs an evaluation by a whole trajectory or by a trajectory point. The evaluation by the whole trajectory has a poor real-time performance, such that quality of matching the whole trajectory is good but quality of matching a local area is not good. In addition, a granularity of the evaluation by the trajectory point is too fine, such that the evaluation has a good real-time performance, but has instability in the quality of the map matching, resulting in poor evaluation effect.

## SUMMARY

Embodiments of the present disclosure provide a method and a device for determining quality of trajectory-matching data, a server and a medium. In embodiments, global and local granularities may be combined to evaluate quality of map matching, such that both a problem that a real-time performance of matching by a global trajectory is poor and a problem that quality of the map matching is instable due to a fine granularity of matching by a trajectory point may be avoided.

Embodiments of the present disclosure provide a method for determining quality of trajectory-matching data. The method includes:

matching a travel trajectory with a road network to determine a road where the travel trajectory is located;
determining global quality of the travel trajectory based on road information of the road where the travel trajectory is located and data of the travel trajectory;
dividing the travel trajectory into at least two trajectory segments; and
determining local quality of one of the at least two trajectory segments based on trajectory data of the trajectory segment and road information of a road where the trajectory segment is located.

Embodiments of the present disclosure provide a device for determining quality of trajectory-matching data. The device includes:

a road determining module, configured to match a travel trajectory with a road network to determine a road where the travel trajectory is located;
a global quality determining module, configured to determine global quality of the travel trajectory based on road information of the road where the travel trajectory is located and data of the travel trajectory;
a trajectory dividing module, configured to divide the travel trajectory into at least two trajectory segments; and
a local quality determining module, configured to determine local quality of one of the at least two trajectory segments based on trajectory data of the trajectory segment and road information of a road where the trajectory segment is located.

Embodiments of the present disclosure provide a medium having a computer program stored thereon. When the computer program is executed by a processor, the method for determining quality of trajectory-matching data according to embodiments of the first aspect is implemented.

With embodiments of the present disclosure, the road where the travel trajectory is located may be determined by matching the travel trajectory obtained in real time with the road network. Global quality of the travel trajectory may be determined based on information of the road where the travel trajectory is located and data of the travel trajectory, such that the determined global quality of the travel trajectory may be reasonable and reliable, and have a good real-time performance. In addition, the travel trajectory may be divided into at least two trajectory segments. For each trajectory segment, local quality of the trajectory segment may be determined based on trajectory data of the trajectory segment and road information of a road where the trajectory segment is located. Compared with the related art, global and local granularities may be combined in embodiments to evaluate the quality of the map matching, such that both a problem that the real-time performance of matching by a global trajectory is poor and a problem that quality of the map matching is instable due to a fine granularity of matching by the trajectory point may be avoided. Furthermore, embodiments further provide the global quality and the local quality of the trajectory point so as to provide valuable reference for applications of intelligent transportation (road conditions, ETA), navigation (route mining, road tying), and data engine information (opening, blocking, hooking, new road discovery, traffic limitation) to use the map-matching data.

## BRIEF DESCRIPTION OF THE DRAWINGS

FIG. 1 is a flowchart illustrating a method for determining quality of trajectory-matching data according to some embodiments of the present disclosure.
FIG. 2A is a flowchart illustrating a method for determining quality of trajectory-matching data according to some embodiments of the present disclosure.
FIG. 2B is a schematic diagram illustrating a travel trajectory and a road where the travel trajectory is located according to some embodiments of the present disclosure.
FIG. 3A is a flowchart illustrating a method for determining quality of trajectory-matching data according to some embodiments of the present disclosure.
FIG. 3B is a schematic diagram illustrating sliding of a sliding window according to some embodiments of the present disclosure.
FIG. 3C is a schematic diagram illustrating adjustment of a size of a sliding window according to some embodiments of the present disclosure.
FIG. 4 is a flowchart illustrating a method for determining quality of trajectory-matching data according to some embodiments of the present disclosure.
FIG. 5 is a block diagram illustrating a device for determining quality of trajectory-matching data according to some embodiments of the present disclosure.
FIG. 6 is a schematic diagram illustrating a server according to some embodiments of the present disclosure.

## DETAILED DESCRIPTION

The present disclosure will be described in detail below with reference to the accompanying drawings and the embodiments. It should be understood that, the specific embodiments described herein are only used to explain the present disclosure rather than to limit the present disclosure. In addition, it should also be noted that, for convenience of description, only part but not all structures related to the present disclosure are illustrated in the accompanying drawings.

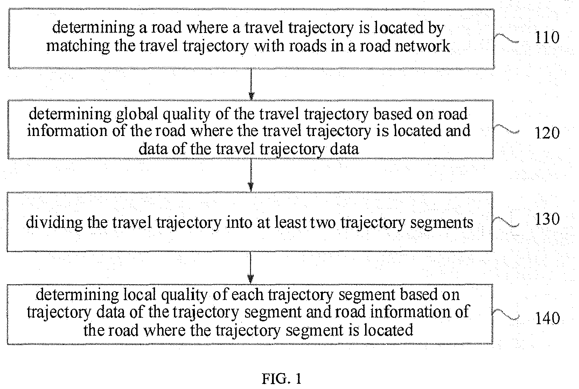

FIG. 1 is a flowchart illustrating a method for determining quality of trajectory-matching data according to some embodiments of the present disclosure. The embodiment may be applicable to determine the quality of the trajectory-matching data, to solve a problem that a real-time performance of matching by a global trajectory is poor and a problem that quality of the map matching is instable due to a fine granularity of matching by a trajectory point, existing in related arts. The method may be implemented by a device for determining quality of trajectory-matching data according to embodiments of the present disclosure. The device may be implemented by hardware and/or software. As illustrated in FIG. 1, the method may specifically include followings.
At block 110, a travel trajectory is matched with roads of a road network to determine a road where the travel trajectory is located.
In embodiments, the travel trajectory may be obtained by receiving, in sequence, data of positioning points sent in real time by a communication device of a vehicle and detected by a positioning device (such as GPS, global positioning system) arranged on the vehicle. The data of positioning point may be data of trajectory points and may include coordinate information, such as latitudes and longitudes of the trajectory points. The road network may include roads that are presented on the electronic map.
In detail, the travel trajectory may be obtained in real time by communicating with the communication device of the vehicle. The travel trajectory obtained in real time may be drawn on an electronic map. The road where the travel trajectory is located may be determined by matching the travel trajectory with the roads in the road network using map matching technologies such as network topology algorithm, curve fitting algorithm, similarity algorithm, fuzzy logic algorithm or the like. For example, based on a topological relationship among the roads in the road network, a road closest to the travel trajectory may be determined as the road where the travel trajectory is located. In addition, a curve function may be established based on the data of each trajectory point of the travel trajectory. By fitting to the roads in the road network, the road where the travel trajectory is located may be determined based on a result of the fitting.

At block 120, global quality of the travel trajectory is determined based on road information of the road where the travel trajectory is located and data of the travel trajectory.

In embodiments, the road information of the road where the travel trajectory is located may include road direction, latitude and longitude of each point on the road, road name, road attribute, and determination whether a fork is included, and the number of forks. The road attribute may be a type of the road, including, but being not limited to, a tunnel, an elevated road, main and auxiliary roads, and an internal road. The data of the travel trajectory may be data of each trajectory point of the travel trajectory.

The global quality of the travel trajectory may refer to an evaluation of the map-matching data of the travel trajectory. Optionally, the global quality has a good real-time performance and may be dynamically adjusted based on changes in the data of the travel trajectory.

In detail, a statistical analysis method may be used to analyze the road information of the road where the travel trajectory is located and the data of the travel trajectory, to obtain the global quality of the travel trajectory. In addition, at least one feature dimension may be determined based on the road information of the road where the travel trajectory is located and the data of the travel trajectory. The at least one determined feature dimension may be input into a pre-trained prediction model for calculation to obtain the global quality of the travel trajectory. In order to enable the pre-trained prediction model to be applicable to different road conditions, embodiments adopt different travel trajectories and roads where the travel trajectories are located corresponding to different road conditions as sample data. For each sample data, a sample feature dimension may be extracted. The sample feature dimension and global quality of a sample travel trajectory may be input into a XGBoost model for splitting, fitting and iterating, to obtain the prediction model.

The feature dimension may be used to indicate a similarity between the travel trajectory and the road where the travel trajectory is located. The feature dimension may vary depending on travel trajectories under different travel scenarios. In embodiments, multiple feature dimensions may be used to determine the global quality of the travel trajectory. In an example, the feature dimension may include, but not limited to, a projection distance of the travel trajectory, an emission probability, an angle between a travel direction and a road direction, a deviation weight, and a road attribute. It should be noted that, since the trajectory points are updated in real time, the feature dimensions determined based on the road information of the road where the travel trajectory is located and the data of the travel trajectory data are updated in real time, such that the global quality of the travel trajectory is dynamic. A strategy of determining the feature dimension and a strategy of determining the global quality of the travel trajectory based on the feature dimension will be described in detail below.

Exemplarily, determining the global quality of the travel trajectory based on the road information of the road where the travel trajectory is located and the data of the travel trajectory data may include followings.

A. a projection distance of the travel trajectory, an angle between a travel direction and a road direction, and an emission probability are determined, based on the road information of the road where the travel trajectory is located and the data of the travel trajectory.

In embodiments, the projection distance of the travel trajectory, the angle between the travel direction and the road direction, and the emission probability respectively indicate different feature dimensions. The projection distance of the travel trajectory may include a mean value and a variance of projection distances of trajectory points included in the travel trajectory. To avoid existence of an abnormal trajectory point, the projection distance of the travel trajectory may further include a maximum among the projection distances of the trajectory points of the travel trajectory. The projection distance of the trajectory point included in the travel trajectory may refer to a distance between the trajectory point of the travel trajectory and a projection point of the trajectory point on the road where the travel trajectory is located. Correspondingly, the mean value and the variance of the projection distances of the trajectory points included in the travel trajectory may be a mean value and a variance of the projection distances of all trajectory points included in the travel trajectory. The projection distances of the trajectory points included in the travel trajectory may be ranked from large to small, and a mean value of projection distances of a preset number (such as the first three) of trajectory points may be used as the maximum among the projection distances of the trajectory points of the travel trajectory.

The angle between the travel direction and the road direction may include a mean value and a variance of angles between the travel direction of trajectory points included in the travel trajectory and the road direction. To avoid existence of an abnormal trajectory point, the angle between the travel direction and the road direction may also include a maximum among angles. The angles between the travel direction of each trajectory point in the travel trajectory and the road direction may be ranked from large to small, and a mean value of a preset number of (such as the first three) angles between the travel direction and the road direction may be taken as the maximum.

The emission probability may be a probability, for each trajectory point, that the trajectory point belongs to a road segment in the road network. The emission probability may be determined based on the projection distance and the angle between the travel direction and the road direction. In detail, the emission probability of each trajectory point in the travel trajectory may be determined based on the projection distance of each trajectory point in the travel trajectory and the angle between the travel direction and the road direction of each trajectory point in the travel trajectory.

In detail, after determining the road where the travel trajectory is located, the projection distance of the travel trajectory and the angle between the travel direction and the road direction may be determined based on the road information of the road where the travel trajectory is located and the data of the travel trajectory. In addition, the emission probability of each trajectory point in the travel trajectory may be determined based on the projection direction of each trajectory point in the travel trajectory and the angle between the travel direction of each trajectory point and the road direction.

B, the global quality of the travel trajectory is determined based on at least one of the projection distance of the travel trajectory, the angle between the travel direction and the road direction, and the emission probability.

In embodiments, the projection distance of the travel trajectory, the angle between the travel direction and the road direction, and the emission probability may be input into the pre-trained prediction model, to obtain the global quality of the travel trajectory. In detail, one of the three feature dimensions, i.e., the projection distance of the travel trajectory, the angle between the travel direction and the road direction, and the emission probability, may be used as the global quality of the travel trajectory. In an example, based on influence weights of the three feature dimensions on the global quality, a feature dimension having a large influence weight may be taken as the global quality of the travel trajectory.

At block 130, the travel trajectory is divided into at least two trajectory segments.

In embodiments, the travel trajectory may be directly divided into at least two trajectory segments based on the road information of the road where the travel trajectory is located, a relationship among the trajectory points in the travel trajectory, and the like.

It is also possible to process the travel trajectory based on a sliding window to divide the travel trajectory into at least two trajectory segments. In detail, the travel trajectory may be processed based on the sliding window. During processing the travel trajectory, a size of the sliding window may be dynamically adjusted based on the road information of the road where the travel trajectory is located and the relationship among the trajectory points in the travel trajectory. A result of dividing the travel trajectory may be determined based on a processing result by the sliding window. In an example, the processing result by the sliding window may be used as the result of dividing the travel trajectory. Dividing the travel trajectory based on the sliding window may be described in detail below.

At block 140, local quality of each trajectory segment is determined based on the trajectory data of the trajectory segment and road information of the road where the trajectory segment is located.

In embodiments, the local quality of the trajectory segment may refer to an evaluation on the map-matching data in a unit of the trajectory segment.

For each trajectory segment of the travel trajectory, the feature dimension of the trajectory segment may be determined based on the trajectory data of the trajectory segment and the road information of the road where the trajectory segment is located. The local quality of the trajectory segment may be determined based on the feature dimension of the trajectory segment. In an example, the local quality of the trajectory segment may be determined by the pre-trained prediction model.

In addition, if the road attribute is the fork road, such as entrance and exit of main and auxiliary roads, the road matching may have uncertainty. Therefore, in order to ensure the determined local quality of the trajectory section reasonable, in embodiments, for determining the local quality of the trajectory segments, the road attribute may also be taken into account. In detail, the feature dimension of the trajectory segment may be determined based on the trajectory data of the trajectory segment and the road information of the road where the trajectory segment is located. An initial local quality of the trajectory segment may be determined based on the feature dimension of the trajectory segment. The local quality of the trajectory segment may be determined based on the initial local quality and the road attribute.

In embodiments, after the global quality of the travel trajectory and the local quality of each trajectory segment of the travel trajectory are determined in real time, the global quality and the local quality may be associated with the travel trajectory and provided to a downstream application, such as an application of intelligent transportation (road conditions), navigation (route digging), and data engine information (opening, blocking, hooking). The downstream application may filter out in real time a travel trajectory having a poor quality of map matching. In addition, in embodiments, the evaluation is performed on the local quality in the unit of the trajectory segment, thereby avoiding a problem may be avoided that the quality of the map matching based on the trajectory point is low caused by a slight shake of the positioning point detected by the positioning device due to a fine granularity of matching by a trajectory point.

Exemplarily, after the local quality of the trajectory segment is determined, the method may further include the following. In response to a request for obtaining the map-matching data, the travel trajectories are filtered based on the global quality and the local quality of the trajectory points in the travel trajectory.

In embodiments, the request for obtaining the map-matching data may be a request for obtaining the global quality and local quality of the trajectory points in the travel trajectory, sent in real time by the downstream application. Since the global quality of the travel trajectory and the local quality of each trajectory segment of the travel trajectory are determined in a case where the travel trajectory is acquired in real time, the method may be considered as an online streaming process. Therefore, the global quality of the trajectory points of the travel trajectory may represent the local quality of the travel trajectory, and the local quality of the trajectory points included in the travel trajectory may be the local quality of each trajectory segment of the travel trajectory.

In detail, after the request for obtaining the map-matching data sent in real time by the downstream application is received, the travel trajectories may be filtered based on the global quality of the travel trajectory and the local quality of each trajectory segment of the travel trajectory determined from blocks 110 to 140. Remaining travel trajectories may be provided to the downstream application. In an example, for each travel trajectory, the global quality and the local mass of the trajectory points included in the travel trajectory may be weighted and summed. A travel trajectory having a small summation may be filtered out, and remaining travel trajectories may be provided to the downstream application.

With the technical solution according to embodiments of the present disclosure, the road where the travel trajectory is located may be determined by matching the travel trajectory obtained in real time with roads in the road network. The global quality of the travel trajectory may be determined based on the road information of the road where the travel trajectory is located and the data of the travel trajectory, to enable the global quality of the travel trajectory reasonable and reliable and to have a good real-time performance. In addition, the travel trajectory may be divided into at least two trajectory segments. For each trajectory segment, the local quality of the trajectory segment may be determined based on the trajectory data of the trajectory segment and road information of the road where the trajectory segment is located. Compared with related arts, global and local granularities are combined in the present disclosure to evaluate the quality of the map matching, such that both a problem that a real-time performance of matching by a global trajectory is poor and a problem that quality of the map matching is instable due to a fine granularity of matching by the trajectory point may be avoided. Furthermore, embodiments of the present disclosure may provide both the global quality and the local quality of the trajectory points so as to valuable reference for applications of intelligent transportation (road conditions, ETA), navigation (route mining, road tying), and data engine information (opening, blocking, hooking, new road discovery, traffic limitation) to use the map-matching data.

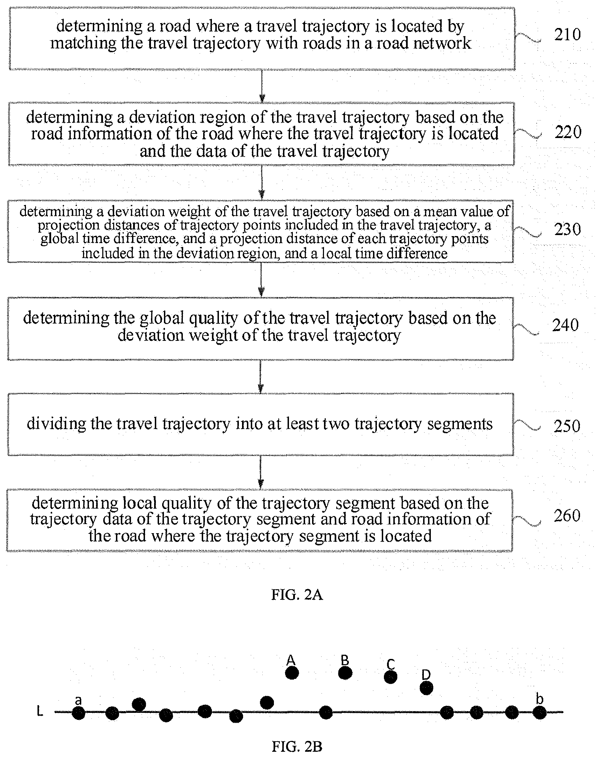

FIG. 2A is a flowchart illustrating a method for determining quality of trajectory-matching data according to some embodiments of the present disclosure. Based on the embodiments illustrated in FIG. 1, embodiments illustrated in FIG. 2A further describe the block of determining the global quality of the travel trajectory based on the road information of the road where the travel trajectory is located and the data of the travel trajectory. As illustrated in FIG. 2A, the method may further include followings.

At block 210, the travel trajectory is matched with roads in a road network to determine the road where the travel trajectory is located.

At block 220, a deviation region of the travel trajectory is determined based on the road information of the road where the travel trajectory is located and the data of the travel trajectory.

In embodiments, the deviation region of the travel trajectory may refer to a region enclosed by a deviated trajectory point of the travel trajectory and the road where the travel trajectory is located. The deviated trajectory point may be a trajectory point that deviate from the road where the travel trajectory is located. In order to reduce complexity of subsequent calculation, the deviated trajectory point may be a trajectory point having a projection distance included in the travel trajectory greater than a preset threshold. The preset threshold may be a preset distance threshold and may be greater than a mean value of the projection distances of trajectory points included in the travel trajectory by a certain value. For example, as illustrated in FIG. 2B, the "dots" represent respective trajectory points included in the travel trajectory, while the straight line L represents the road where the travel trajectory is located. The deviation region of the travel trajectory may be enclosed by deviated trajectory points A, B, C, and D and the line L.

In detail, the deviated trajectory points may be determined based on the latitude and longitude of each point on the road where the travel trajectory is located and the data of the travel trajectory data (i.e., the latitude and longitude of each trajectory point included in the travel trajectory). The deviation region may be determined based on the deviated trajectory points.

At block 230, a deviation weight of the travel trajectory is determined based on a mean value of projection distances of the trajectory points included in the travel trajectory, a global time difference, a projection distance of each trajectory point included in the deviation region, and a local time difference.

The mean value of projection distances of the trajectory points included in the travel trajectory may be a mean value of the projection distances of all trajectory points included in the travel trajectory, for indicating an average deviation to the travel trajectory. In embodiments, the projection distance of each trajectory point in the deviation region may be a projection distance for each trajectory point of each deviation region. In detail, the projection distance of each trajectory point in the deviation region may be a distance between the trajectory point and the projection point of the trajectory point on the road where the travel trajectory is located. The deviation weight of the travel trajectory may be used to represent a degree of the deviation region of the travel trajectory deviates from the travel trajectory.

The global time difference may be a time difference between a first trajectory point and a last trajectory point included in the travel trajectory. In detail, a difference between the time of obtaining the first trajectory point of the travel trajectory and the time of obtaining the last trajectory point of the travel trajectory may be obtained. For example, the time difference between the trajectory point a and the trajectory point b in the travel trajectory may be obtained, as illustrated in FIG. 2B. The local time difference may be a time difference between a certain trajectory point and the last trajectory point included in the travel trajectory. For example, the local time difference for a trajectory point A included in the deviation region may be a time difference between the time of acquiring the trajectory point A and the time of acquiring the trajectory point b. In addition, each trajectory point in the deviation region may also be referred to as a deviated trajectory point.

In detail, an absolute deviation distance of each trajectory point may be determined based on the project distance of each trajectory point included in the deviation region and the mean value of the projection distances of trajectory points included in the travel trajectory. The influence weight of each trajectory point may be determined based on the local time difference of each trajectory point in the deviation region and the global time difference. For each trajectory point in the deviation region, the deviation weight of the trajectory point may be determined based on the absolute deviation distance and the influence weight of the trajectory point. The deviation weight of each trajectory point included in the deviation region may be summed up to obtain a deviation weight of the travel trajectory. The influence weight of each trajectory point may be used to reflect the influence of the trajectory point on a direction of the travel trajectory. A ratio of the local time difference of the trajectory point to the global time difference may be used as the influence weight of the trajectory point. For each trajectory point in the deviation region, a product of the absolute deviation distance and the influence weight of the trajectory point may be used as the deviation weight of the trajectory point.

For example, as illustrated in Fig. 2B, the mean value of the projection distances of the trajectory points included in the travel trajectory may $dist_{mean}$, and the global time difference may be T, the local time differences of the trajectory points A, B, C and D in the deviation region may be $T_A$, $T_B$, $T_C$, $T_D$, respectively, the projection distances of the trajectory points A, B, C and D included in the deviation regions may be $dist$(A), $dist$(B), $dist$(C), and $dist$(D) respectively. The deviation weight of the travel trajectory represented by $Area$ may be derived as:

$$Area=|\left(dist(A)-dist_{mean}\right)|*\frac{T_A}{T}+|\left(dist(B)-dist_{mean}\right)|*\frac{T_B}{T}+|\left(dist(C)-dist_{mean}\right)|*\frac{T_C}{T}+...$$

At block 240, the global quality of the travel trajectory is determined based on the deviation weight of the travel trajectory.

In detail, after the deviation weight of the travel trajectory is determined, the deviation weight of the travel trajectory may be directly determined as the global quality of the travel trajectory. In an example, the global quality of the travel trajectory may be determined based on the deviation weight of the travel trajectory, and at least one of the projection distance of the travel trajectory, the angle between the travel direction and the road direction, and the emission probability. In detail, the deviation weight of the travel trajectory, and at least one of the projection distance of the travel trajectory, the angle between the travel direction and the road direction and the emission probability may be input into the pre-trained prediction model for calculation to determine the global quality of the travel trajectory.

At block 250, the travel trajectory is divided into at least two trajectory segments.

At block 260, the local quality of one of the at least two trajectory segments is determined based on the trajectory data of the trajectory segment and road information of the road where the trajectory segment is located.

With the embodiments of the present disclosure, the road where the travel trajectory is located may be determined by matching the travel trajectory obtained in real time with roads in the road network. The deviation weight of the travel trajectory may be determined by combining the data of the travel trajectory and the road information of the road where the travel trajectory is located. The global quality of the travel trajectory may be determined based on the deviation weight of the travel trajectory. By taking the influence of the deviation region of the travel trajectory on the entire travel trajectory into account, the determined global quality of the travel trajectory may be reasonable and reliable and may have a good real-time performance. In addition, the travel trajectory may be divided into at least two trajectory segments. For each trajectory segment, the local quality of the trajectory segment may be determined based on the trajectory data of the trajectory segment and the road information of the road where the trajectory segment is located. Compared with related arts, global and local granularities may be combined in embodiments to evaluate the quality of the map matching, such that both a problem that the real-time performance of matching by a global trajectory is poor and a problem that quality of the map matching is instable due to a fine granularity of matching by the trajectory point may be avoided. In addition, embodiments further provide the global quality and the local quality of the trajectory point so as to provide valuable reference for applications of intelligent transportation (road conditions, ETA), navigation (route mining, road tying), and data engine information (opening, blocking, hooking, new road discovery, traffic limitation) to use the map-matching data.

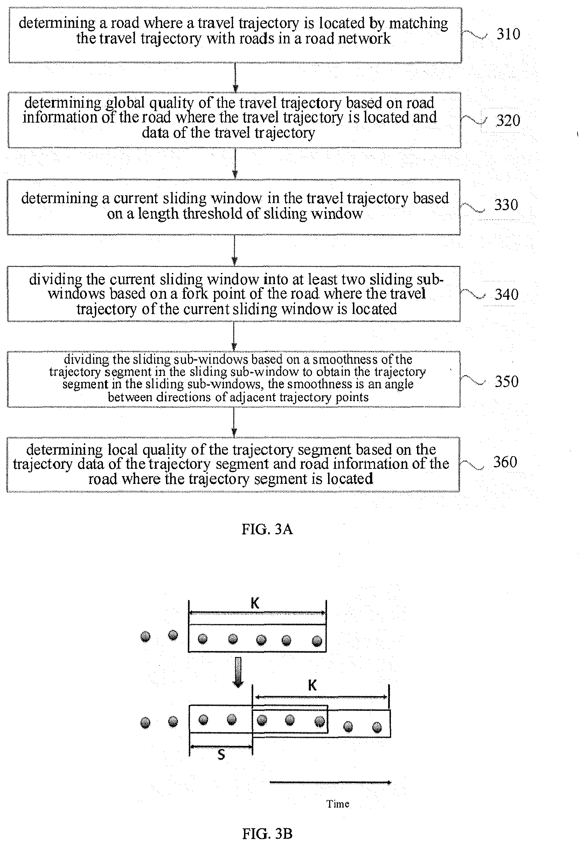

FIG. 3A is a flowchart illustrating a method for determining quality of trajectory-matching data according to some embodiments of the present disclosure. Embodiments further describe dividing the travel trajectory into at least two trajectory segments on the basis of the above embodiments illustrated in FIGS. 1 and 2. As illustrated in FIG. 3A, the method may include followings.

At block 310, the travel trajectory is matched with the roads in the road network to determine the road where the travel trajectory is located.

At block 320, the global quality of the travel trajectory is determined according to the road information of the road where the travel trajectory is located and the data of the travel trajectory.

At block 330, a current sliding window of the travel trajectory is determined based on a length threshold of the sliding window.

In embodiments, the length threshold of the sliding window may refer to a preset number of trajectory points of the sliding window, which may be represented by K. It may be defaulted that the sliding window may slide forward at a moving speed, i.e., s=2 trajectory points each time, and the moving speed may be adjusted according to actual situations. For example, the length threshold of the sliding window K may be 5, and the sliding window may slide forward at the moving speed, i.e s=2 trajectory points each time. FIG. 3B illustrates a sliding direction and a sliding process of the sliding window over time.

In detail, based on the length threshold of the sliding window and the moving speed of the sliding window, the current sliding window of the travel trajectory may be determined.

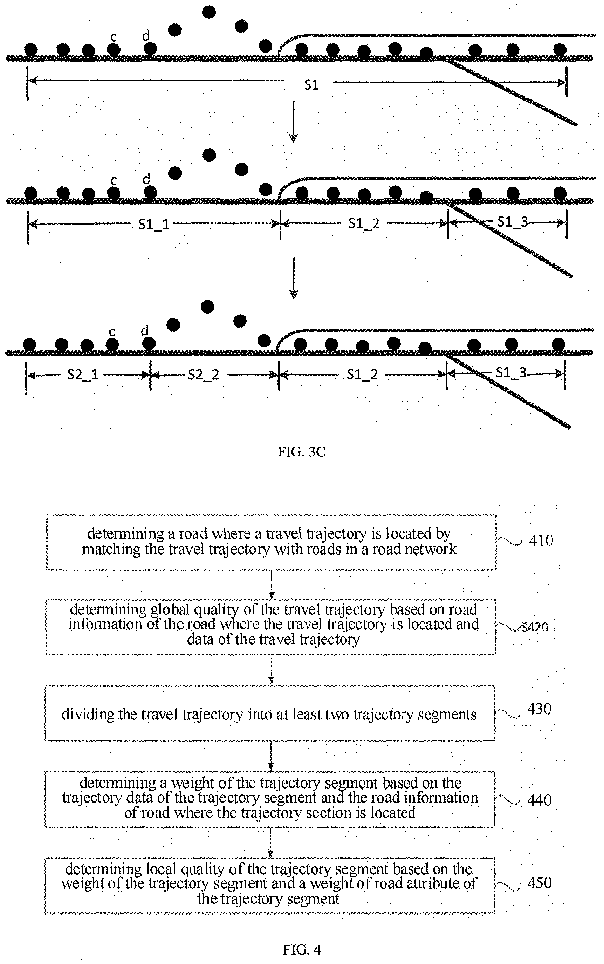

It should be noted that, since the number of trajectory points is relatively large in a real and complicated road condition, the length threshold of the sliding window K and the moving speed may be set large. For example, the length threshold of the sliding window may be set as 17. In addition, it is also possible to determine the sliding window directly based on a road level. For example, a part of the road having a same road level may be grouped into a same sliding window, and the sliding window may slide at a moving speed, i.e., one road level each time. Correspondingly, the length threshold of the sliding window may be a minimum value among the number of trajectory points included in different parts of road having different road levels respectively. For example, if it is determined that the road where the travel trajectories are located has the same road level at block 310, the travel trajectory may be directly determined to be within a same sliding window. FIG. 3C illustrates the current sliding window determined of the travel trajectory.

At block 340, the current sliding window is divided into at least two sliding sub-windows based on a fork point of the road where the travel trajectory in the current sliding window is located.

In embodiments, the fork point of the road may refer to an intersection between one road and another road, such as an entrance and an exit of main and auxiliary roads.

In detail, the fork point of the road where the travel trajectory is located and the number of fork points may be determined based on the road information of the road where the travel trajectory in the current sliding window is located. The current sliding window may be divided into multiple sliding sub-windows based on the fork point and the number of fork points. For example, the number of multiple sliding sub-windows may equal to the number of fork points by adding 1.

For example, two fork points E and F exist on the road where the travel trajectory in the current sliding window is located, as illustrated in FIG. 3C. The current sliding window may be divided into three sliding sub-windows based on the two fork points. The current sliding window may be represented by SI, and the three sliding sub-windows may be represented as S1_1, S1_2, and S1_3, respectively.

At block 350, each sliding sub-window is divided based on a smoothness of the trajectory segment in the sliding sub-window to obtain the trajectory segment in the sliding sub-window. The smoothness is an angle between directions of adjacent trajectory points.

In embodiments, for each sliding sub-window, it may be determined whether the smoothness of the trajectory segment in the sliding sub-window satisfies a preset dividing condition. In response to satisfying the preset dividing condition, the sliding sub-window is divided. In response to not satisfying the preset dividing condition, the sliding sub-window may not be divided. The dividing condition may be that the angle between the directions of the adjacent trajectory points is greater than an angle threshold. The angle threshold may be preset, and may be adjusted according to actual conditions. For example, the angle threshold may be set as 30 degrees. For example, based on the smoothness of the trajectory segment in the sliding sub-window, dividing the sliding sub-window may include the following. For the trajectory segment in the sliding sub-window, in response to detecting that an angle between a travel direction of a trajectory point included in the trajectory segment and a travel direction of a previous adjacent trajectory point is greater than the angle threshold, the trajectory point may be taken as a starting point of a new trajectory segment.

In detail, for each sliding sub-window, the sliding sub-window may be divided into multiple sliding sub-sub-windows based on the smoothness of the trajectory segment in the sliding sub-window. Trajectory points in each sliding sub-sub-window may form a trajectory segment, such that a respective trajectory segment corresponding to each sliding sub-sub-window may be obtained.

For example, as illustrated in FIG. 3C, the angle between the travel direction of the trajectory point c and the travel direction of the trajectory point d in the sliding sub-window S1_1 is greater than 30 degrees. The sliding sub-window S1_1 may be divided into two sliding sub-sub-windows S2_1 and S2_2.

It should be noted that, in embodiments, the size of the sliding window may be dynamically adjusted based on the road information of the road where the travel trajectory is located, the relationship among trajectory points included in the travel trajectory. The result of dividing the travel trajectory may be determined based on the processing result via the sliding window, so that the division of the travel trajectory is reasonable. In addition, the local quality of the trajectory segment determined based on the trajectory data of the trajectory segment and the road information of the road where the trajectory segment is located may be used as a valuable reference. Furthermore, embodiments may avoid a problem that quality of the map matching is instable due to a fine granularity of matching by the trajectory point may be avoided.

At block 360, the local quality of the trajectory segment is determined based on the trajectory data of the trajectory segment and the road information of the road where the trajectory segment is located.

With embodiments of the present disclosure, the road where the travel trajectory is located may be determined by matching the travel trajectory obtained in real time with the roads in the road network. The global quality of the travel trajectory may be determined by combining the data of the travel trajectory and the road information of the road where the travel trajectory is located, such that the determined global quality of the travel trajectory may be reasonable and reliable, and have a good real-time performance. In addition, the size of the sliding window may be dynamically adjusted based on the road information of the road where the travel trajectory is located and the relationship among the trajectory points included in the travel trajectory. The result of dividing the travel trajectory may be determined based on the processing result by the sliding window, such that the division of the travel trajectory may be reasonable, and the local quality of the travel trajectory determined based on the road information of the road where the travel trajectory is located and the data of the travel trajectory may be used as a valuable reference. Compared with related arts, global and local granularities may be combined in embodiments to evaluate the quality of the map matching, such that both a problem that the real-time performance of matching by a global trajectory is poor and a problem that quality of the map matching is instable due to a fine granularity of matching by the trajectory point may be avoided. Furthermore, embodiments further provide the global quality and the local quality of the trajectory point so as to provide valuable reference for applications of intelligent transportation (road conditions, ETA), navigation (route mining, road tying), and data engine information (opening, blocking, hooking, new road discovery, traffic limitation) to use the map-matching data.

FIG. 4 is a flowchart illustrating a method for determining quality of trajectory-matching data according to some embodiments of the present disclosure. Based on the above embodiments illustrated in FIGS. 1-3, the block of determining the local quality of the trajectory segment based on the trajectory data of each trajectory segment included in the travel trajectory and the road information of the road where the trajectory segment is located will be described in detail below. As illustrated in Fig. 4, the method may include the following.

At block 410, the road where the travel trajectory is located is determined by matching the travel trajectory with roads in the road network.

At block 420, the global quality of the travel trajectory is determined based on the road information of the road where the travel trajectory is located and the data of the travel trajectory.

At block 430, the travel trajectory is divided into at least two trajectory segments.

At block 440, a weight of the trajectory segment is determined based on the trajectory data of the trajectory segment and the road information of the road where the trajectory segment is located.

In embodiments, the manner of determining the weight of the trajectory segment may be same as the manner of determining the global quality of the travel trajectory. The weight of the trajectory segment may be referred to as an initial local quality of the trajectory segment.

Exemplarily, for each trajectory segment of the travel trajectory, at least one feature dimension of the trajectory segment may be determined based on the trajectory data of the trajectory segment and the road information of the road where the trajectory segment is located. The at least one determined feature dimension may be inputted into a pre-trained prediction model for calculation to obtain the weight of the trajectory segment.

In detail, for each trajectory segment of the travel trajectory, the deviation region of the trajectory segment may be determined based on the trajectory data of the trajectory segment and the road information of the road where the trajectory segment is located. The deviation weight of the travel trajectory may be determined based on a mean value of projection distances of the trajectory points included in the travel trajectory, a global time difference, a respective projection distance of a trajectory point in the deviation region and a local time difference. The mean value of the projection distances of the trajectory points included in the travel trajectory may refer to a mean value of the projection distances of all trajectory points included in the travel trajectory. The global time difference may be the time difference between a first trajectory point and a last trajectory point included in the travel trajectory. The local time difference is the time difference between the trajectory point and a last trajectory point of the trajectory segment. The weight of the trajectory segment may be determined as the initial local quality of the trajectory segment based on the deviation weight of the trajectory segment.

In an example, the projection distance of the trajectory segment, the angle between the travel direction and the road direction, and an emission probability may be determined based on the trajectory data of the trajectory section and the road information of the road where the trajectory segment is located. The weight of the trajectory segment may be determined based on at least one of the projection distance of the trajectory segment, the angle between the travel direction and the road direction, and the emission probability.

In addition, the weight of the trajectory segment may be determined based on the deviation weight of the trajectory segment, and at least one of the projection distance of the trajectory segment, the angle between the travel direction and the road direction, and the emission probability.

At block 450, the local quality of the trajectory segment is determined based on the weight of the trajectory segment and a weight of the road attribute of the trajectory segment.

In embodiments, for each trajectory segment of the travel trajectory, by comprehensively considering the trajectory data of the trajectory segment and the information of the road where the trajectory segment is located, a problem that the quality of the map matching is instable due to a fine granularity of matching by the trajectory point may be avoided. The matching with the road trajectory may have uncertainty under different road conditions. For example, for entrance and exist of main and auxiliary roads, the road matching has uncertainty. Therefore, in order to enable the determined local quality of the trajectory segment reasonable, in embodiments the road attribute may be comprehensively considered. The weight of the road attribute of the trajectory segment may be preset in advance. In an example, the weight of the road attribute of the trajectory segment may be determined based on a certainty of the road matching. For example, for a trajectory segment that the road matching has uncertainty, the weight of the road attribute of the trajectory segment may be reduced. For the trajectory segment that the road matching has certainty, the weight of the road attribute of the trajectory segment may be set as 1.

In detail, for each trajectory segment of the travel trajectory, a product of the weight of the trajectory section and the weight of the road attribute of the trajectory segment may be used as the local quality of the trajectory segment.

With embodiments of the present disclosure, the road where the travel trajectory is located may be determined by matching the travel trajectory determined in real time with roads in the road network. The global quality of the travel trajectory may be determined based on the data of the travel trajectory and the road information of the road where the travel trajectory is located, to enable the determined global quality of the travel trajectory reasonable and reliable, and have a good real-time performance. In addition, the travel trajectory may be divided into at least two trajectory segments. For each trajectory segment, the local quality of the trajectory segment may be determined based on the trajectory data of the trajectory segment, the road information of the road where the trajectory segment is located, and the weight of the road attribute of the trajectory segment. Compared with related arts, global and local granularities are combined in embodiments to evaluate the quality of the map matching, such that both a problem that the real-time performance of matching by a global trajectory is poor and a problem that quality of the map matching is instable due to a fine granularity of matching by the trajectory point may be avoided. Furthermore, embodiments further provide the global quality and the local quality of the trajectory point so as to provide valuable reference for applications of intelligent transportation (road conditions, ETA), navigation (route mining, road tying), and data engine information (opening, blocking, hooking, new road discovery, traffic limitation) to use the map-matching data.

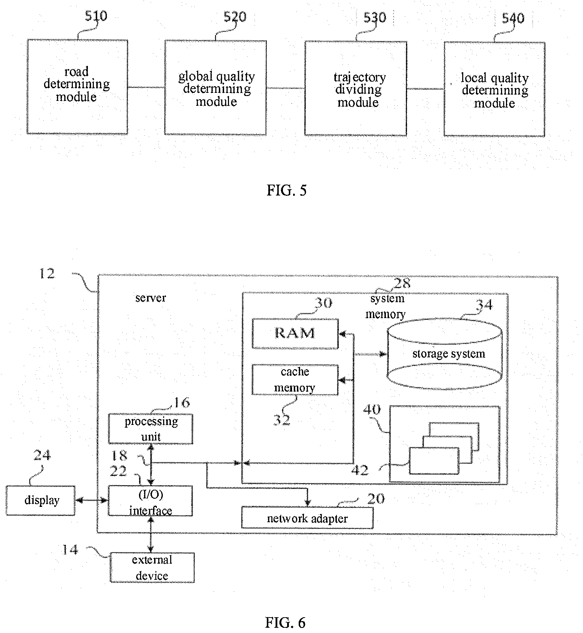

FIG. 5 is a block diagram illustrating a device for determining quality of a trajectory-matching data according to some embodiments of the present disclosure. The device may be configured to execute a method for determining quality of trajectory-matching data according to embodiments of the present disclosure and may have corresponding functional modules and beneficial effect of the method. As illustrated in FIG. 5, the device may include a road determining module 510, a global quality determining module 520, a trajectory dividing module 530, and a local quality determining module 540.

The road determining module 510 may be configured to determine a road where a travel trajectory is located by matching the travel trajectory with roads in a road network.

The global quality determining module 520 may be configured to determine global quality of the travel trajectory based on road information of the road where the travel trajectory is located and data of the travel trajectory.

The trajectory dividing module 530 may be configured to divide the travel trajectory into at least two trajectory segments.

The local quality determining module 540 may be configured to determine local quality of each trajectory segment based on trajectory data of the trajectory segment and road information of the road where the trajectory segment is located.

With the technical solution according to embodiments of the present disclosure, the road where the travel trajectory is located may be determined by matching the travel trajectory obtained in real time with roads in the road network. The global quality of the travel trajectory may be determined based on the road information of the road where the travel trajectory is located and the data of the travel trajectory, to enable the global quality of the travel trajectory reasonable and reliable and to have a good real-time performance. In addition, the travel trajectory may be divided into at least two trajectory segments. For each trajectory segment, the local quality of the trajectory segment may be determined based on the trajectory data of the trajectory segment and road information of the road where the trajectory segment is located. Compared with related arts, global and local granularities are combined in the present disclosure to evaluate the quality of the map matching, such that both a problem that a real-time performance of matching by a global trajectory is poor and a problem that quality of the map matching is instable due to a fine granularity of matching by the trajectory point may be avoided. Furthermore, embodiments of the present disclosure may provide both the global quality and the local quality of the trajectory points so as to valuable reference for applications of intelligent transportation (road conditions, ETA), navigation (route mining, road tying), and data engine information (opening, blocking, hooking, new road discovery, traffic limitation) to use the map-matching data.

For example, the global quality determining module 520 may be further configured to determine a deviation region of the travel trajectory based on the road information of the road where the travel trajectory is located and the data of the travel trajectory.

In addition, the global quality determining module 520 may be further configured to determine a deviation weight of the travel trajectory based on a mean value of projection distances of the trajectory points included in the travel trajectory, a global time difference, a projection distance of each trajectory point included in the deviation region and a local time difference. The global time difference may be a time difference between a first trajectory point and a last trajectory point included in the travel trajectory. The local time difference may be a time difference between each trajectory point and the last trajectory point included in the travel trajectory.

Furthermore, the global quality determining module 520 may be further configured to determine the global quality of the travel trajectory based on the deviation weight of the travel trajectory.

For example, the global quality determining module 520 may be further configured to determine a projection distance of the travel trajectory, an angle between a travel direction and a road direction, and an emission probability, based on the road information of the road where the travel trajectory is located and the data of the travel trajectory.

In addition, the global quality determining module 520 may be configured to determine the global quality of the travel trajectory based on at least one of the projection distance of the travel trajectory, the angle between the travel direction and the road direction, and the emission probability.

For example, the trajectory dividing module 530 may include a current window determining unit, a current window dividing unit, and a sub-window dividing unit.

The current window determining unit may be configured to determine a current sliding window of the travel trajectory based on a length threshold of the sliding window.

The current window dividing unit may be configured to divide the current sliding window into at least two sliding sub-windows based on a fork point of the road where the travel trajectory in the current sliding window is located.

The sub-window dividing unit may be configured to divide each sliding sub-window based on a smoothness of the trajectory segment in the sliding sub-window to obtain a trajectory segment in the sliding sub-windows. The smoothness is an angle between directions of adjacent trajectory points.

For example, the sub-window dividing unit may be configured to: in response to detecting that an angle between a travel direction of a trajectory point included in the trajectory segment and a travel direction of a previous adjacent trajectory point is greater than an angle threshold, determine the trajectory point as a starting point of a new trajectory segment.

For example, the local quality determining module 540 may be further configured to determine a weight of the trajectory segment based on the trajectory data of the trajectory segment and the road information of road where the trajectory segment is located.

In addition, the local quality determining module 540 may be further configured to determine the local quality of the trajectory segment based on the weight of the trajectory segment and a weight of road attribute of the trajectory segment.

For example, the device may also include a filtering module.

The filtering module may be configured to, after the local quality of the trajectory segment is determined, filter travel trajectories based on the global quality and the local quality of the trajectory points included in the travel trajectory, in response to a request for obtaining map-matching.

FIG. 6 is a schematic diagram illustrating a server according to some embodiments of the present disclosure. FIG. 6 illustrates an exemplary server suitable for implementing example embodiments of the present disclosure. The server shown in fig. 6 is only an example and shall not restrict the function and scope of use of the embodiments of the present disclosure.

As shown in FIG. 6, the server 12 is represented in the form of a general purpose computing server. The components of the server 12 may include, but are not limited to, one or more processors or processing units 16, system memory 28, and buses 18 that connects different system components, including the system memory 28 and the processing units 16.

The bus 18 represents one or more of several types of bus structures, including a memory bus or a memory controller, a peripheral bus, a graphics acceleration port, a processor, or a local bus using any of a variety of bus structures. For example, these architectures include, but are not limited to, an Industry Standard Architecture (hereinafter referred to as ISA) bus, a Micro Channel Architecture (hereinafter referred to as MAC) bus, an enhanced ISA bus, a Video Electronics Standards Association (hereinafter referred to as VESA) local bus and Peripheral Component Interconnection (PCI) bus.

The server 12 typically includes a variety of computer system readable medium. These medium may be any available medium accessible by the server 12 and includes both volatile and non-volatile media, removable and non-removable media.

The system memory 28 may include a computer system readable medium in the form of volatile memory, such as a random access memory (hereinafter referred to as RAM) 30 and/or a cache memory 32. The server 12 may further include other removable or non-removable, volatile or non-volatile computer system storage media. By way of example only, the storage system 34 may be configured to read and write a non-removable and non-volatile magnetic media (not shown in FIG. 6, commonly referred to as a "hard drive"). Although not shown in FIG. 6, a magnetic disk driver for reading from and writing to a removable and non-volatile magnetic disk (such as "floppy disk") and a disk driver for a removable and non-volatile optical disk (such as compact disk read only memory (hereinafter referred to as CD-ROM), Digital Video Disc Read Only Memory (hereinafter referred to as DVD-ROM) or other optical media) may be provided. In these cases, each driver may be connected to the bus 18 via one or more data medium interfaces. The memory 28 may include at least one program product. The program product has a set (such as, at least one) of program modules configured to perform the functions of various embodiments of the present disclosure.

The programs/utilities 40 having a set (at least one) of program modules 42, which may be stored, for example, in the system memory 28, such program modules 42 include, but is not limited to, operating systems, one or more applications, other program modules, and program data. Implementations of the network environment may be included in each or some combination of the examples. The program module 42 typically performs the functions and/or methods of the described embodiments of the present disclosure.

The server 12 can also be in communication with one or more external devices 14 (e.g., keyboard, pointing device, display 24), and can also be in communication with one or more devices that enable a user to interact with the server 12, and/ or communicate with any device (e.g., a network card, a modem) that enables the server 12 to communicate with one or more other computing devices. This communication can take place via an input/output (I/O) interface 22. Moreover, the server 12 can also communicate with one or more networks (e.g., a local area network (LAN), a wide area network (WAN), and/or a public network, such as the Internet) through a network adapter 20. As shown, the network adapter 20 communicates with other modules of the server 12 via the bus 18. It should be understood that although not shown in the figures, other hardware and/or software modules may be utilized in combination with the server 12, including but not limited to: microcode, device drivers, redundant processing units, external disk drive arrays, redundant arrays of independent disks (RAID) systems, tape drives, and data backup storage systems.

The processing unit 16 executes various functional applications and data processing by running a program stored in the system memory 28, for example, for implementing the parking control method in the embodiments of the present disclosure.

This embodiment provides a computer readable storage medium having a computer program (or computer executable instructions) stored thereon. When the program is executed by a processor, the method for determining quality of trajectory-matching data is executed. The method may include the following.

A road where a travel trajectory is located is obtained by matching a travel trajectory with roads in a road network.

Global quality of the travel trajectory is determined based on road information of the road where the travel trajectory is located and data of the travel trajectory.

The travel trajectory is divided into at least two trajectory segments.

Local quality of each trajectory segment is determined based on the trajectory data of the trajectory segment and road information of the road where the trajectory segment is located.

The above storage medium may adopt any combination of one or more computer-readable media. The computer readable medium may be a computer readable signal medium or a computer readable storage medium. The computer readable storage medium may be, but is not limited to, for example, an electrical, magnetic, optical, electromagnetic, infrared, or semiconductor system, apparatus, device, component or any combination thereof. A specific example of the computer readable storage media includes (a non-exhaustive list): an electrical connection having one or more wires, a portable computer disk, a hard disk, a random access memory (RAM), a read only memory (ROM), an Erasable Programmable Read Only Memory (EPROM) or a flash memory, an optical fiber, a compact disc read-only memory (CD-ROM), an optical memory component, a magnetic memory component, or any suitable combination thereof. In context, the computer readable storage medium may be any tangible medium including or storing programs. The programs may be used by an instruction executed system, apparatus or device, or a connection thereof.

The computer readable signal medium may include a data signal propagating in baseband or as part of a carrier which carries computer readable program codes. Such propagated data signal may be in many forms, including but not limited to an electromagnetic signal, an optical signal, or any suitable combination thereof. The computer readable signal medium may also be any computer readable medium other than the computer readable storage medium, which may send, propagate, or transport programs used by an instruction executed system, apparatus or device, or a combination thereof.

The program code stored on the computer readable medium may be transmitted using any appropriate medium, including but not limited to wireless, wireline, optical fiber cable, RF, or any suitable combination thereof.

The computer program code for carrying out operations of embodiments of the present disclosure may be written in one or more programming languages. The programming language includes an object oriented programming language, such as Java, Smalltalk, C++, as well as conventional procedural programming language, such as "C" language or similar programming language. The program code may be executed entirely on a user's computer, partly on the user's computer, as a separate software package, partly on the user's computer, partly on a remote computer, or entirely on the remote computer or server. In a case of the remote computer, the remote computer may be connected to the user's computer or an external computer (such as using an Internet service provider to connect over the Internet) through any kind of network, including a Local Area Network (hereafter referred as to LAN) or a Wide Area Network (hereafter referred as to WAN).

It should be noted that, the above are only preferred embodiments and applied technical principles of the present disclosure. Those skilled in the art should understand that, the present disclosure is not limited to the specific embodiments described herein, and various obvious changes, readjustments and substitutions that are made by those skilled in the art will not depart from the scope of the present disclosure. Therefore, although the present disclosure has been described in detail by the above embodiments, the present disclosure is not limited to the above embodiments, and more other equivalent embodiments may be included without departing from the concept of the present disclosure, and the scope of the present disclosure is determined by the scope of the appended claims.

## Claims

1. A method for determining quality of trajectory-matching data, comprising:

   determining (110; 210; 310; 410) a road where a travel trajectory is located by matching the travel trajectory with roads in a road network;
   determining (120; 320; 420) global quality of the travel trajectory based on road information of the road where the travel trajectory is located and data of the travel trajectory;
   dividing (130; 250; 430) the travel trajectory into at least two trajectory segments; and
   determining (140; 260; 360) local quality of each trajectory segment based on trajectory data of the trajectory segment and road information of the road where the trajectory segment is located.

2. The method of claim 1, wherein determining (120; 320; 420) the global quality of the travel trajectory based on the road information of the road where the travel trajectory is located and the data of the travel trajectory comprises:

   determining (220) a deviation region of the travel trajectory based on the road information of the road where the travel trajectory is located and the data of the travel trajectory;
   determining (230) a deviation weight of the travel trajectory based on a mean value of projection distances of trajectory points included in the travel trajectory, a global time difference, a projection distance of each trajectory point included in the deviation region, and a local time difference, the global time difference being a time difference between a first trajectory point and a last trajectory point included in the travel trajectory, and the local time difference being a time difference between each trajectory point and the last trajectory point included in the travel trajectory; and
   determining (240) the global quality of the travel trajectory based on the deviation weight of the travel trajectory.

3. The method of claim 1, wherein determining (120; 320; 420) the global quality of the travel trajectory based on the road information of the road where the travel trajectory is located and the data of the travel trajectory comprises:

   determining a projection distance of the travel trajectory, an angle between a travel direction and a road direction, and an emission probability, based on the road information of the road where the travel trajectory is located and the data of the travel trajectory; and
   determining the global quality of the travel trajectory based on at least one of the projection distance of the travel trajectory, the angle between the travel direction and the road direction, and the emission probability.

4. The method of any one of claims 1 to 3, wherein dividing (130; 250; 430) the travel trajectory into at least two trajectory segments comprises:

   determining (330) a current sliding window of the travel trajectory based on a length threshold of sliding window;
   dividing (340) the current sliding window into at least two sliding sub-windows based on a fork point of the road where the travel trajectory in the current sliding window is located; and
   dividing (350) each sliding sub-window based on a smoothness of the trajectory segment in the sliding sub-window to obtain the trajectory segment in the sliding sub-window, the smoothness being an angle between directions of adjacent trajectory points.

5. The method of claim 4, wherein dividing (350) each sliding sub-window based on the smoothness of the trajectory segment in the sliding sub-window, comprises:
for the trajectory segment in the sliding sub-window, in response to detecting that an angle between a travel direction of a trajectory point included in the trajectory segment and a travel direction of a previous adjacent trajectory point is greater than an angle threshold, determining the trajectory point as a starting point of a new trajectory segment.

6. The method of any one of claims 1 to 5, wherein determining (140; 260; 360) the local quality of the trajectory segment based on the trajectory data of the trajectory segment and the road information of the road where the trajectory segment is located comprises:

   determining (440) a weight of the trajectory segment based on the trajectory data of the trajectory segment and the road information of road where the trajectory segment is located; and
   determining (450) the local quality of the trajectory segment based on the weight of the trajectory segment and a weight of road attribute of the trajectory segment.

7. The method of any one of claims 1 to 6, further comprises:

   in response to a request for obtaining map-matching data, filtering travel trajectories based on the global quality and the local quality of the trajectory points included in the travel trajectory.

8. A device for determining quality of trajectory-matching data, comprising:

   a road determining module (510), configured to determine a road where a travel trajectory is located by matching the travel trajectory with roads in a road network;
   a global quality determining module (520), configured to determine global quality of the travel trajectory based on road information of the road where the travel trajectory is located and data of the travel trajectory;
   a trajectory dividing module (530), configured to divide the travel trajectory into at least two trajectory segments; and
   a local quality determining module (540), configured to determine local quality of the trajectory segment based on trajectory data in the trajectory segment and road information of the road where the trajectory segment is located.

9. The device of claim 8, wherein the global quality determining module (520) is further configured to:

   determine a deviation region of the travel trajectory based on the road information of the road where the travel trajectory is located and the data of the travel trajectory;
   determine a deviation weight of the travel trajectory based on a mean value of projection distances of trajectory points included in the travel trajectory, a global time difference, a projection distance of each trajectory point included in the deviation region, and a local time difference, the global time difference being a time difference between a first trajectory point and a last trajectory point included in the travel trajectory, and the local time difference being a time difference between each trajectory point and the last trajectory point included in the travel trajectory; and
   determine the global quality of the travel trajectory based on the deviation weight of the travel trajectory.

10. The device of claim 8, wherein the global quality determining module (520) is further configured to:

    determine a projection distance of the travel trajectory, an angle between a travel direction and a road direction, and an emission probability, based on the road information of the road where the travel trajectory is located and the data of the travel trajectory; and
    determine the global quality of the travel trajectory based on at least one of the projection distance of the travel trajectory, the angle between the travel direction and the road direction, and the emission probability.

11. The device of any one of claims 8 to 10, wherein the trajectory dividing module (530) comprises:

    a current window determining unit, configured to determine a current sliding window of the travel trajectory based on a length threshold of sliding window;

a current window dividing unit, configured to divide the current sliding window into at least two sliding sub-windows based on a fork point of the road where the travel trajectory in the current sliding window is located; and

a sub-window dividing unit, configured to divide each sliding sub-window based on a smoothness of the trajectory segment in the sliding sub-window to obtain the trajectory segment in the sliding sub-window, the smoothness being an angle between directions of adjacent trajectory points.

12. The electronic device of claim 11, wherein the sub-window dividing unit is further configured to:

for the trajectory segment in the sliding sub-window, in response to detecting that an angle between a travel direction of a trajectory point included in the trajectory segment and a travel direction of a previous adjacent trajectory point is greater than an angle threshold, determine the trajectory point as a starting point of a new trajectory segment.

13. The electronic device of any one of claims 8 to 12, wherein the local quality determining module (540) is further configured to:

determine a weight of the trajectory segment based on the trajectory data of the trajectory segment and the road information of road where the trajectory segment is located; and

determine the local quality of the trajectory segment based on the weight of the trajectory segment and a weight of road attribute of the trajectory segment.

14. The electronic device of any one of claims 8 to 13, further comprising:

a filtering module, configured to, in response to a request for obtaining map-matching data, filter travel trajectories based on the global quality and the local quality of the trajectory points included in the travel trajectory.

15. A computer readable storage medium having a computer program stored thereon, wherein when the program is executed by a processor, the method for determining quality of trajectory-matching data of any one of claims 1 to 7 is implemented.

determining a road where a travel trajectory is located by matching the travel trajectory with roads in a road network    ∿ 110

determining global quality of the travel trajectory based on road information of the road where the travel trajectory is located and data of the travel trajectory data    ∿ 120

dividing the travel trajectory into at least two trajectory segments    ∿ 130

determining local quality of each trajectory segment based on trajectory data of the trajectory segment and road information of the road where the trajectory segment is located    ∿ 140

FIG. 1

determining a road where a travel trajectory is located by matching the travel trajectory with roads in a road network ~ 210

determining a deviation region of the travel trajectory based on the road information of the road where the travel trajectory is located and the data of the travel trajectory ~ 220

determining a deviation weight of the travel trajectory based on a mean value of projection distances of trajectory points included in the travel trajectory, a global time difference, and a projection distance of each trajectory points included in the deviation region, and a local time difference ~ 230

determining the global quality of the travel trajectory based on the deviation weight of the travel trajectory ~ 240

dividing the travel trajectory into at least two trajectory segments ~ 250

determining local quality of the trajectory segment based on the trajectory data of the trajectory segment and road information of the road where the trajectory segment is located ~ 260

FIG. 2A

FIG. 2B

determining a road where a travel trajectory is located by matching the travel trajectory with roads in a road network $\quad\sim$ 310

determining global quality of the travel trajectory based on road information of the road where the travel trajectory is located and data of the travel trajectory $\quad\sim$ 320

determining a current sliding window in the travel trajectory based on a length threshold of sliding window $\quad\sim$ 330

dividing the current sliding window into at least two sliding sub-windows based on a fork point of the road where the travel trajectory of the current sliding window is located $\quad\sim$ 340

dividing the sliding sub-windows based on a smoothness of the trajectory segment in the sliding sub-window to obtain the trajectory segment in the sliding sub-windows, the smoothness is an angle between directions of adjacent trajectory points $\quad\sim$ 350

determining local quality of the trajectory segment based on the trajectory data of the trajectory segment and road information of the road where the trajectory segment is located $\quad\sim$ 360

FIG. 3A

K

K

S

Time

FIG. 3B

FIG. 3C

determining a road where a travel trajectory is located by matching the travel trajectory with roads in a road network  ~ 410

determining global quality of the travel trajectory based on road information of the road where the travel trajectory is located and data of the travel trajectory  ~ S420

dividing the travel trajectory into at least two trajectory segments  ~ 430

determining a weight of the trajectory segment based on the trajectory data of the trajectory segment and the road information of road where the trajectory section is located  ~ 440

determining local quality of the trajectory segment based on the weight of the trajectory segment and a weight of road attribute of the trajectory segment  ~ 450

FIG. 4

510

520

530

540

| road determining module | global quality determining module | trajectory dividing module | local quality determining module |

FIG. 5

12

server

28

system memory

30

RAM

34

storage system

cache memory

32

16

processing unit

40

24

18

22

42

display

(I/O) interface

20

network adapter

14

external device

FIG. 6

**Europäisches Patentamt**
**European Patent Office**
**Office européen des brevets**

# EUROPEAN SEARCH REPORT

Application Number

EP 20 16 5168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2016 225243 A1 (IBM [US]) 22 June 2017 (2017-06-22) * paragraphs [0006] - [0008], [0032] - [0057]; figures 4A-4D * ----- | 1-15 | INV. G01C21/30 |

TECHNICAL FIELDS
SEARCHED      (IPC)

G01C

The present search report has been drawn up for all claims

| Place of search | Date of completion of the search | Examiner |
|---|---|---|
| The Hague | 5 August 2020 | Tabellion, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 5168

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2020

| Patent document cited in search report | Publication date | Patent family member(s) | Publication date |
|---|---|---|---|
| DE 102016225243 A1 | 22-06-2017 | CN 106960568 A<br>DE 102016225243 A1<br>JP 2017111813 A<br>US 2017178499 A1 | 18-07-2017<br>22-06-2017<br>22-06-2017<br>22-06-2017 |

For more details about this annex : see Official Journal of the European Patent Office, No. 12/82